# EUROPÄISCHE PATENTSCHRIFT

(11) **EP 3 624 920 B1**
(45) Veröffentlichungstag und Bekanntmachung des Hinweises auf die Patenterteilung: **13.10.2021**
(21) Anmeldenummer: 18746624.8
(22) Anmeldetag: 16.07.2018
(51) Int. Cl.: B01D 46/24, B01D 45/08, F01D 25/32

(54) **DAMPFSIEB**
STEAM STRAINER
FILTRE À VAPEUR

(30) Priorität: 27.07.2017 DE 102017212944
(43) Veröffentlichungstag der Anmeldung: 25.03.2020
(73) Patentinhaber: Siemens Energy Global GmbH & Co. KG, 81739 München (DE)
(72) Erfinder: BREINDL, Martin, 92369 Sengenthal (DE); TRÜBEL, Armin, 603 50 Norrköping (SE)
(86) Internationale Anmeldenummer: PCT/EP2018/069242
(87) Internationale Veröffentlichungsnummer: WO 2019/020422

(56) Entgegenhaltungen:
- EP-A1- 1 806 168
- EP-A1- 2 146 059
- EP-A1- 2 745 909
- US-A- 5 575 618

## Beschreibung

Die Erfindung betrifft ein Dampfsieb, das insbesondere für die Verwendung in einem Schnellschlussventil einer Dampfturbine ausgelegt ist.

Schnellschlussventile sind im Stand der Technik in unterschiedlichsten Ausgestaltungen bekannt. Sie werden zur schlagartigen Unterbrechung einer Rohrströmung eingesetzt. Ferner ist es bekannt, Schnellschlussventile mit einem Dampfsieb zu versehen. Das Dampfsieb dient dem Schutz des Ventils sowie stromabwärts des Ventils angeordneter Komponenten vor in der Strömung mitgetragenen Fremdkörpern.

Aufgrund der in einer Dampfturbine vorherrschenden Betriebsbedingungen, insbesondere in Form von Schwingungsbelastungen und/oder Temperaturschwankungen, sind Dampfsiebe einem großen Verschleiß unterworfen. Da herkömmliche Dampfsiebe nur sehr eingeschränkt für Reparaturen geeignet sind, werden sie entsprechend in regelmäßigen Wartungszyklen durch neue Dampfsiebe ersetzt, was mit hohen Kosten einhergeht. Beispielsweise behandeln EP 2745909 A1, EP 1806168 A1 und US 5575618 A Dampfsiebe und deren Einsatz.

Ein weiteres Problem herkömmlicher Dampfsiebe besteht darin, dass durch sie die Rohrströmung negativ beeinträchtigt wird. Diesbezüglich wäre es wünschenswert, den negativen Einfluss von Dampfsieben auf die Rohrströmung zu verringern.

Ausgehend von diesem Stand der Technik ist es eine Aufgabe der vorliegenden Erfindung, ein Dampfsieb mit alternativem Aufbau vorzuschlagen, das die zuvor beschriebenen Nachteile zumindest teilweise behebt.

Zur Lösung dieser Aufgabe schafft die vorliegende Erfindung ein Dampfsieb mit zwei in einer Längsrichtung im Abstand zueinander angeordneten Stützringen und mehreren benachbart zueinander angeordneten, ringsegmentförmigen und eine Vielzahl von Durchgangsöffnungen aufweisenden Siebelementen, die jeweils an den Stützringen lösbar befestigt sind und sich unter Bildung einer Mantelfläche zwischen diesen erstrecken, wobei die Seitenkanten unmittelbar benachbart zueinander angeordneter Siebelemente aneinander anliegen, wobei die Durchgangsöffnungen der Siebelemente einen sich radial einwärts aufweitenden Diffusorabschnitt aufweisen, die Seitenkanten unmittelbar benachbart zueinander angeordneter Siebelemente ineinandergreifende Überlappungsbereiche definieren.. Ein solches Dampfsieb ist zum einen dahingehend von Vorteil, dass das Dampfsieb als Hauptkomponenten lediglich die Stützringe und die Siebelemente aufweist, die über Befestigungsmittel aneinander befestigt sind, insbesondere in Form von Befestigungsschrauben. Dank der Tatsache, dass die Seitenkanten unmittelbar benachbart angeordneter Siebelemente aneinander anliegen und sich unmittelbar benachbart zueinander angeordnete Siebelemente entsprechend gegenseitig abstützen, kann auf weitere Komponenten verzichtet werden, insbesondere auf die Stützringe miteinander verbindende Streben. Insgesamt weist das erfindungsgemäße Dampfsieb vor diesem Hintergrund einen einfachen und preiswerten Aufbau mit wenigen Einzelteilen auf. Ein weiterer Vorteil des erfindungsgemäßen Dampfsiebes besteht darin, dass sich die Siebelemente im Falle eines Verschleißes einzeln austauschen lassen, wohingegen die Stützringe und noch intakte Siebelemente weiter verwendet werden können. Entsprechend geht auch die Wartung des erfindungsgemäßen Dampfsiebes mit geringen Kosten einher.

Gemäß einer Ausgestaltung der vorliegenden Erfindung ist die Mantelfläche zylindrisch oder konisch ausgebildet, wodurch sich ein einfacher Aufbau ergibt.

Die Stützringe weisen an ihrer zu den Siebelementen weisenden Fläche bevorzugt eine ringförmig umlaufende Nut auf, in der die Siebelemente angeordnet sind. Auf diese Weise wird in radialer Richtung des Dampfsiebes ein Formschluss erzielt, wodurch eine sehr gute Stabilität gewährleistet ist.

Bevorzugt sind die Siebelemente in Umfangsrichtung drehsicher in der Nut angeordnet, was ebenfalls der Stabilität zuträglich ist. So kann zumindest eine der Seitenwände der Nut Ausbuchtungen aufweisen und die Siebelemente in die Ausbuchtungen eingreifende Vorsprünge umfassen. Vorteilhaft weisen beide Seitenwände der Nut in radialer Richtung jeweils einander gegenüber angeordnete Ausbuchtungen auf und die Siebelemente umfassen radial einander gegenüber angeordnete, in die Ausbuchtungen eingreifende Vorsprünge. Hierdurch wird ein besonders stabiler Aufbau erzielt.

Am Nutgrund können im Bereich der Ausbuchtungen Durchgangsbohrungen vorgesehen sein, in die sich durch den Stützring erstreckende, insbesondere in diesen versenkte Befestigungsschrauben eingesetzt sind, die in an den Siebelementen ausgebildete Gewindebohrungen eingeschraubt sind. Auf diese Weise wird eine einfach lösbare und preiswerte Befestigung der Siebelemente an den Stützringen erzielt. Die Befestigung der Siebelemente an den Stützringen mittels Befestigungsschrauben ist ein Beispiel einer typischerweise besonders vorteilhaften lösbaren Verbindung.

Alternativ kann eine lösbare Verbindung beispielsweise mittels Zylinderstiften realisiert werden. Derartige Zylinderstifte können zur Demontage beispielsweise wieder herausgedrückt werden. Alternativ können derartige Zylinderstifte auch mittels Aufbohren entfernt werden. Beispielsweise kann mindestens eine Nutseite eine Durchgangsbohrung aufweisen, durch welche ein Zylinderstift geführt wird. Dieser greift in das Siebelement oder durch das Siebelement hindurch und stellt hiermit eine lösbare und äußerst preiswerte sowie zuverlässige Befestigung der Siebelemente an den Stützringen bereit. Typischerweise ist es bei einer lösbaren Verbindung unter Einsatz von Zylinderstiften bevorzugt, dass die Zylinderstifte im Wesentlichen senkrecht zur Mantelfläche eingesetzt werden.

Gemäß der vorliegenden Erfindung definieren die Seitenkanten unmittelbar benachbart zueinander angeordneter Siebelemente ineinandergreifende Überlappungsbereiche. Zum einen wird durch solche Überlappungsbereiche ein der Stabilität zuträglicher Formschluss zwischen den Elementen bewirkt. Zum anderen wird aber auch verhindert, dass ein das Dampfsieb durchströmendes Fluid Stoßstellen zwischen benachbarten Siebelementen ungehindert passieren kann.

Die Durchgangsöffnungen der Siebelemente können einen wabenförmigen Querschnitt oder eine längliche Querschnittsform mit insbesondere abgerundeten Endbereichen aufweisen, wobei die Endbereiche bevorzugt in Richtung der Stützringe weisen. Derartige Querschnitte für Durchgangsöffnungen haben sich als besonders geeignet erwiesen.

Die Durchgangsöffnungen der Siebelemente weisen bevorzugt einen sich radial einwärts aufweitenden Diffusorabschnitt auf, wobei der Diffusorwinkel bis zu 15° beträgt. Typischerweise ist es bevorzugt, dass der Diffusorwinkel im Bereich von 1° bis 15°, insbesondere im Bereich zwischen 5° und 15°, liegt. Derartige Durchgangsöffnungen erwiesen sich für viele Anwendungsfälle als besonders vorteilhaft.

Die Durchgangsöffnungen der Siebelemente können erfindungsgemäß einen mit einer Rundung versehenen Eintrittsbereich aufweisen, wobei der Radius der Rundung insbesondere im Bereich zwischen 0,3 mm und 1,0 mm liegt.

Gemäß einer Ausgestaltung der vorliegenden Erfindung sind zumindest die Siebelemente unter Einsatz eines additiven Herstellungsverfahrens hergestellt, insbesondere 3D-Druckverfahren, mittels beispielsweise selektiven Lasersinterns (SLS), Binder Jetting oder mittels selektiven Laserschmelzens (SLM), vorzugsweise selektiven Lasersinterns (SLS) oder mittels selektiven Laserschmelzens (SLM). Derartige additive Herstellungsverfahren zeichnen sich dadurch aus, dass sie bezogen auf die Form der Durchgangsöffnungen eine sehr große Designfreiheit belassen. 3D-Druckverfahren erstellen hierbei ein Produkt schichtweise beispielsweise aus einem Pulverbett.

Ferner schafft die vorliegende Erfindung ein Dampfsieb mit zumindest einem eine Vielzahl von Durchgangsöffnungen aufweisenden, sich in einer Längsrichtung erstreckenden Siebelement, insbesondere ein Dampfsieb der zuvor beschriebenen Art, bei dem die Ausrichtung der Durchgangsöffnungen der Siebelemente in Abhängigkeit von ihrer Position bezogen auf die Längsrichtung verschieden ist, insbesondere derart, dass ein die Durchgangsöffnungen durchströmendes Fluid aufgrund der jeweiligen Ausrichtung der Durchgangsöffnungen zu einem gemeinsamen Punkt gelenkt wird, der sich insbesondere innerhalb des Dampfsiebes befindet. Mit anderen Worten ist die Ausrichtung der Durchgangsöffnungen lokal verschieden gewählt, um den negativen Einfluss des Dampfsiebes auf die Rohrströmung zu reduzieren.

Weitere Merkmale und Vorteile der vorliegenden Erfindung werden anhand der nachfolgenden Beschreibung verschiedener Dampfsiebe gemäß Ausführungsformen der vorliegenden Erfindung unter Bezugnahme auf die Zeichnung deutlich. Darin ist
- Figur 1: eine perspektivische Draufsicht eines Dampfsiebs gemäß einer ersten Ausführungsform der vorliegenden Erfindung;
- Figur 2: eine perspektivische Explosionsansicht des in Figur 1 hergestellten Dampfsiebs;
- Figur 3: eine perspektivische Teilansicht des in Figur 1 dargestellten Dampfsiebs während der Montage;
- Figur 4: eine weitere Teilansicht des in Figur 1 dargestellten Dampfsiebs im montierten Zustand;
- Figur 5: eine vergrößerte Ansicht des in Figur 1 mit der Bezugsziffer V gekennzeichneten Ausschnitts;
- Figur 6: eine vergrößerte Schnittansicht eines Siebelementes des in Figur 1 dargestellten Dampfsiebes;
- Figur 7: eine perspektivische Ansicht eines alternativen Siebelementes gemäß einer Ausführungsform der vorliegenden Erfindung;
- Figur 8: eine Schnittansicht entlang der Linie VIII-VIII in Figur 7;
- Figur 9: eine vergrößerte Ansicht des in Figur 8 mit der Bezugsziffer IX gekennzeichneten Ausschnitts;
- Figur 10: eine perspektivische Ansicht eines weiteren alternativen Siebelementes gemäß einer Ausführungsform der vorliegenden Erfindung;
- Figur 11: eine Schnittansicht entlang der Linie XI-XI in Figur 7 und
- Figur 12: eine vergrößerte Ansicht des in Figur 8 mit der Bezugsziffer XII gekennzeichneten Ausschnitts.
Gleiche oder gleichartige Bauteile sind nachfolgend mit gleichen Bezugsziffern bezeichnet.

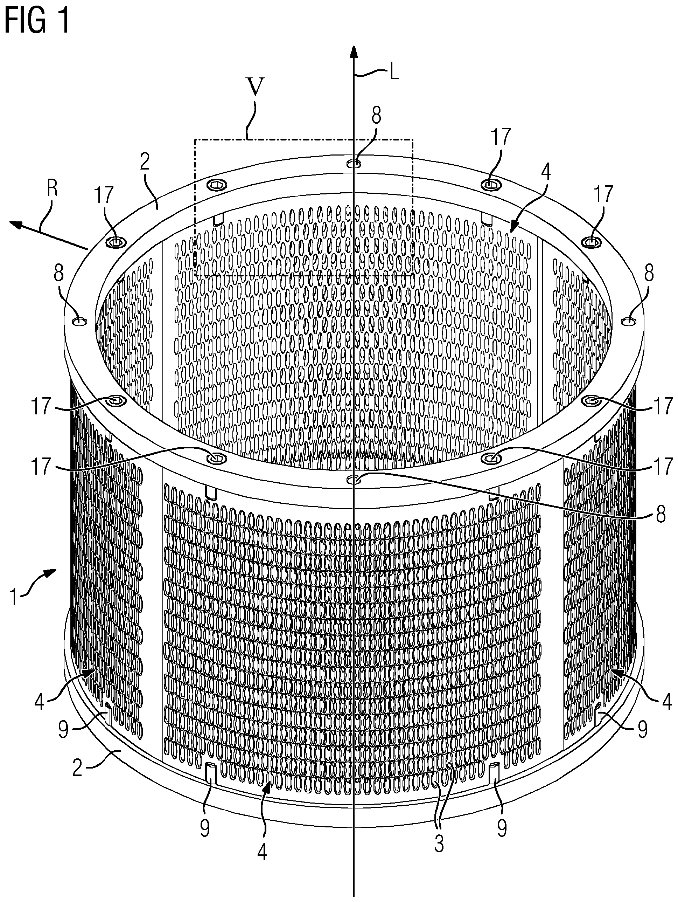

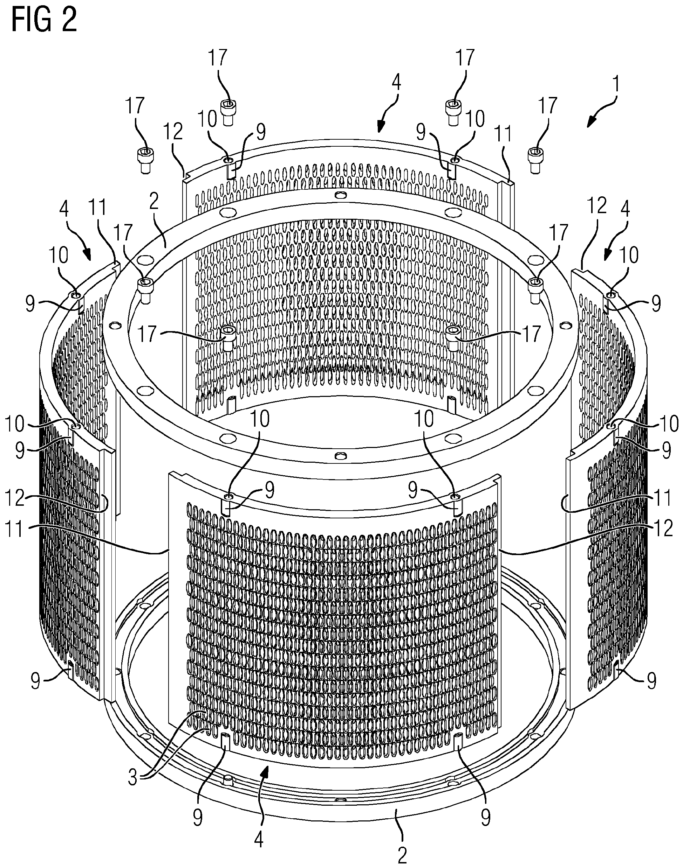

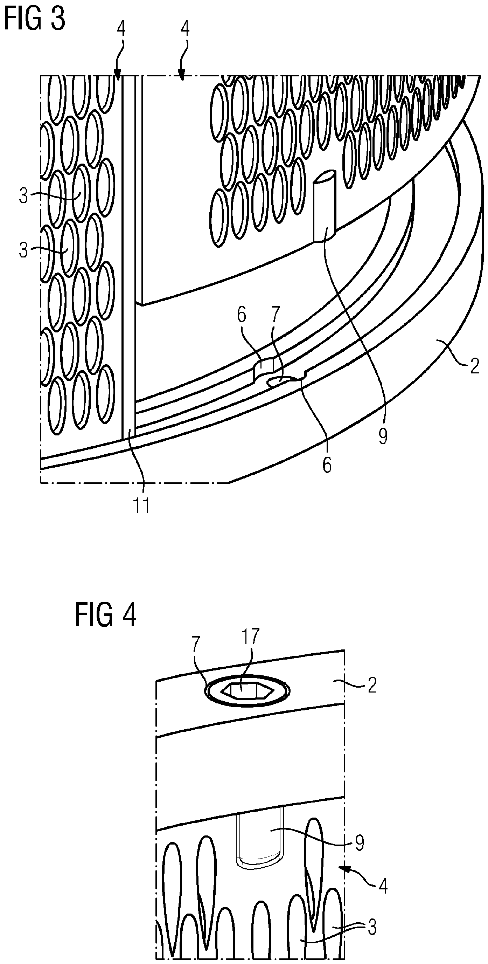

Die Figuren 1 bis 6 zeigen ein Dampfsieb 1 gemäß einer Ausführungsform der vorliegenden Erfindung, das für die Verwendung in einem Schnellschlussventil einer Dampfturbine ausgelegt ist. Das Dampfsieb 1 dient dem Schutz des Schnellschlussventils sowie stromabwärts des Ventils angeordneter Komponenten vor in der Strömung mitgetragenen Fremdkörpern. Es umfasst als Hauptkomponenten zwei in einer Längsrichtung L im Abstand zueinander angeordnete Stützringe 2 und mehrere, vorliegend vier benachbart zueinander angeordnete, ringsegmentförmige und eine Vielzahl von Durchgangsöffnungen 3 aufweisende Siebelemente 4, die jeweils an den Stützringen 2 lösbar befestigt sind und sich unter Bildung einer Mantelfläche zwischen diesen erstrecken.

Die Stützringe 2 sind identisch ausgebildet und vorliegend aus einer Metalllegierung hergestellt. Sie weisen an ihrer zu den Siebelementen 4 weisenden Fläche eine ringförmig umlaufende Nut 5 auf, in welche die Siebelemente 4 im Wesentlichen formschlüssig eingesteckt werden können. An den Seitenwänden der Nut 5 sind in vorbestimmten Abständen entlang des Umfangs in radialer Richtung jeweils einander gegenüber angeordnete, sich radial auswärts erstreckende Ausbuchtungen 6 ausgebildet, die vorliegend die Form eines Ausschnitts einer Zylindermantelfläche aufweisen. Am Nutgrund sind im Bereich einander gegenüber liegender Ausbuchtungen 6 Durchgangsbohrungen 7 vorgesehen, die sich durch den Stützring 2 hindurch erstrecken. Ferner sind am Nutgrund vier umfänglich gleichmäßig voneinander beabstandete Durchgangsgewindebohrungen 8 ausgebildet.

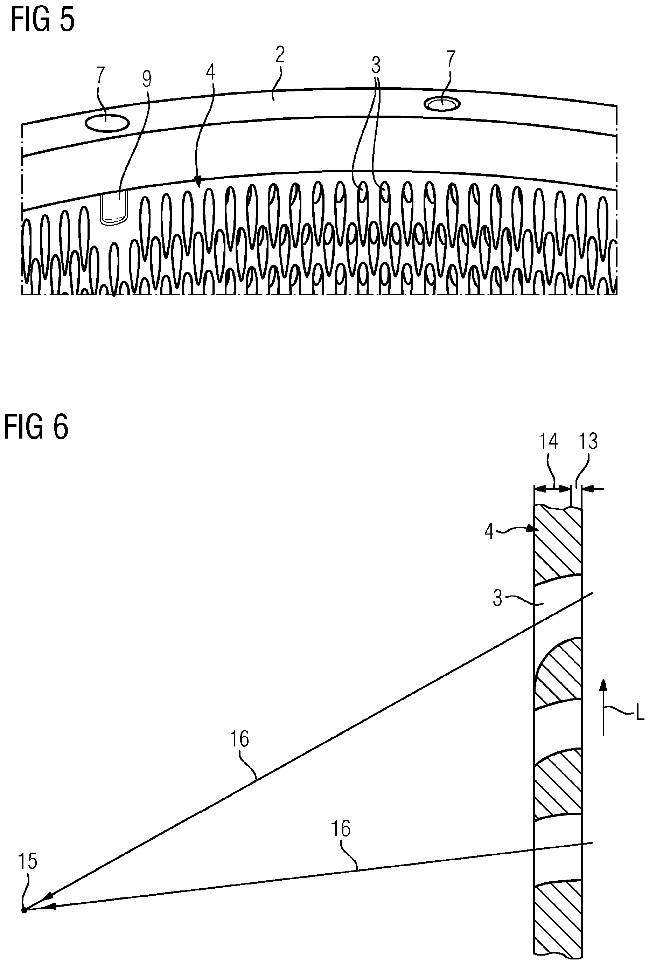

Auch die Siebelemente 4 weisen jeweils einen identischen Aufbau auf. Sie sind vorliegend aus einer Metalllegierung unter Einsatz eines additiven Fertigungsverfahrens hergestellt, wie beispielsweise Selektives Laserschmelzen (SLM). Jedes Siebelement 4 bildet dabei ein Ringsegment der insgesamt zylindrisch ausgebildeten Mantelfläche. Grundsätzlich ist allerdings auch eine konisch oder anders ausgebildete Mantelfläche denkbar. Im Falle einer konischen Mantelfläche müsste dann der Durchmesser des einen Stützrings 2 entsprechend kleiner als der Durchmesser des anderen Stützrings 2 gewählt sein. Im Bereich der zu den Stützringen 2 weisenden Seitenkanten sind an jedem Siebelement 4 Vorsprünge 9 korrespondierend zu den Ausbuchtungen 6 der Stützringe 2 vorgesehen, so dass die Vorsprünge 9 bei der Montage des Dampfsiebs 1 in die Ausbuchtungen 6 eingeschoben werden können, wie es nachfolgend noch im Einzelnen beschrieben ist. Korrespondierend zu den Durchgangsbohrungen 7 der Stützringe 2 sind die zu den Stützringen 2 weisenden Seitenkanten der Siebelemente 4 ferner mit Gewindebohrungen 10 versehen. Die im zusammengesetzten Zustand des Dampfsieb 1 zueinander weisenden Seitenkanten unmittelbar benachbart zueinander angeordneter Siebelemente 4 definieren ineinandergreifende Überlappungsbereiche. Genauer gesagt ist vorliegend jeweils eine entsprechende Seitenkante eines Siebelementes 4 mit einem in Umfangsrichtung vorstehenden Vorsprung 11 und die gegenüberliegende Seitenkante mit einer korrespondierend zu dem Vorsprung 11 ausgebildeten Ausnehmung 12 versehen. Die Durchgangsöffnungen 3 der Siebelemente 4 weisen eine längliche Querschnittform mit insbesondere abgerundeten Endbereichen auf, wobei die Endbereiche im montierten Zustand des Dampfsiebs 1 in Richtung der Stützringe 2 weisen. Die Durchgangsöffnungen 3 haben einen gerundeten Eintrittsbereich 13, wobei der Radius der Rundung im Bereich zwischen 0,3 mm und 1,0 mm liegt. Ferner definieren die Durchgangsöffnungen 3 einen sich radial einwärts aufweitenden Diffusorabschnitt 14. Die Ausrichtung der in einer regelmäßigen Matrix angeordneten Durchgangsöffnungen 3 ist in Abhängigkeit von ihrer Position bezogen auf die Längsrichtung L, also in Abhängigkeit von ihrer Höhe verschieden, wie es in Figur 6 dargestellt ist. Die Ausrichtung ist vorliegend derart gewählt, dass ein die Durchgangsöffnungen 3 durchströmendes Fluid aufgrund der jeweiligen Ausrichtung der Durchgangsöffnungen 3 zu einem gemeinsamen Punkt 15 gelenkt wird, der insbesondere innerhalb des Dampfsiebs angeordnet ist, wie es durch die Pfeile 16 gedeutet ist.

Zur Montage des Dampfsiebs 1 werden die einzelnen Siebelemente 4 nacheinander in einen der Stützringe 2 derart eingesteckt, dass die Vorsprünge 9 der Siebelemente 4 in den Ausbuchtungen 6 der Stützringe 2 aufgenommen und die Seitenkanten benachbart angeordneter Siebelemente 4 übereinander geschoben werden. Ferner werden die Siebelemente 4 unter Verwendung von Befestigungsschrauben 17, die durch die Durchgangsbohrungen 7 des Stützringes 2 eingeführt und in die Gewindebohrungen 10 der jeweiligen Siebelemente 4 eingeschraubt werden, an dem Stützring 2 befestigt. In einem weiteren Schritt wird der zweite Stützring auf die Siebelemente 4 in entsprechender Weise aufgeschoben und befestigt.

Zur Demontage des Dampfsiebes 1 müssen die Befestigungsschrauben 17 gelöst und die Siebelemente 4 von den Stützringen 2 getrennt werden. Sollten die Siebelemente 4 an den Stützringen 2 anhaften, so können in die Durchgangsgewindebohrungen 8 Ausdrückschrauben eingeschraubt werden, um diese voneinander zu trennen, was vorliegend jedoch nicht näher dargestellt ist.

Ein wesentlicher Vorteil des zuvor beschriebenen Dampfsiebs 1 besteht darin, dass es nur wenige Einzelteile umfasst und einen entsprechend einfachen und preiswerten Aufbau aufweist. Ein weiterer Vorteil ist darin zu sehen, dass sich das Dampfsieb 1 einfach montieren und demontieren lässt, so dass sich einzelne Elemente 4 ohne großen Aufwand austauschen lassen, sollten diese verschlissen sein. Ein Austausch der Stützringe 2 und noch intakter Siebelemente 4 ist nicht erforderlich, wodurch Kosten eingespart werden können. Dank der Ausbildung der Durchgangsöffnungen 3 der Siebelemente 4, insbesondere dank der gerundeten Eintrittsbereiche, der Diffusorabschnitte und/oder der Ausrichtung sämtlicher Durchgangsöffnungen 3 auf einen gemeinsamen Punkt 15 werden negative Einflüsse des Dampfsiebs 1 auf die Strömung eines das Dampfsieb 1 durchströmenden Fluids minimiert.

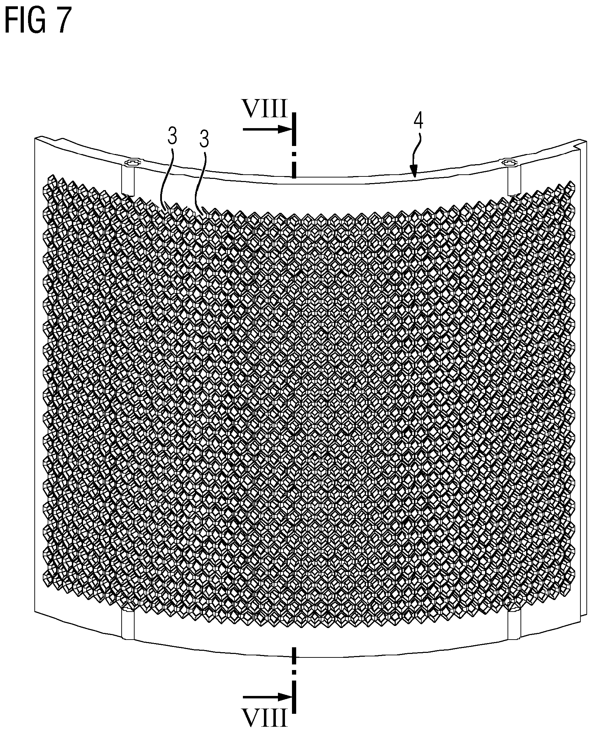

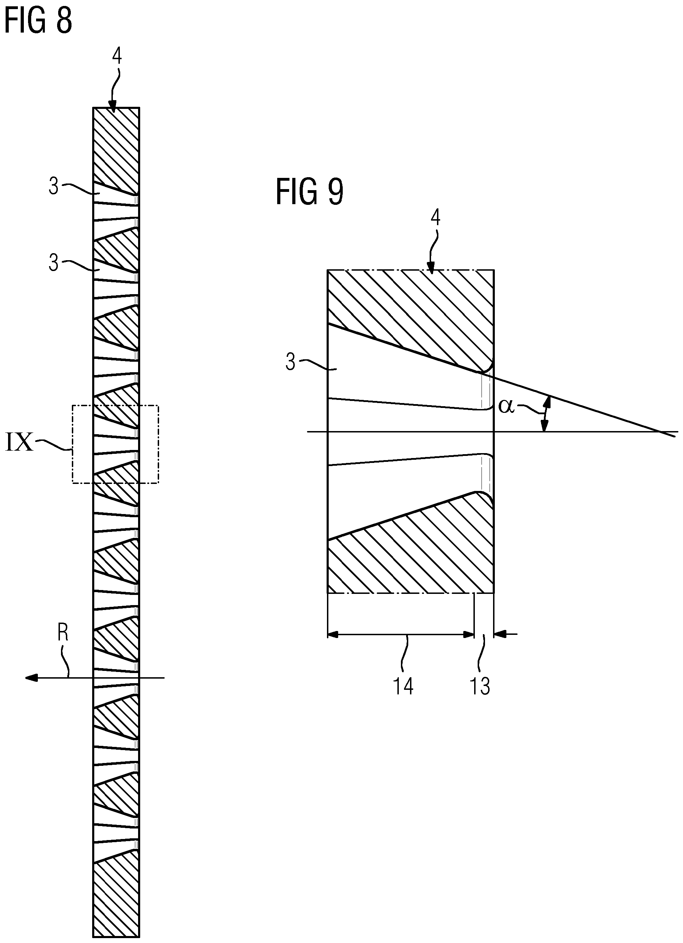

Die Figuren 7 bis 9 zeigen ein Siebelement 4 gemäß einer zweiten Ausführungsform der vorliegenden Erfindung, die sich in Bezug auf die Ausbildung der Durchgangsöffnungen 3 von der zuvor beschriebenen ersten Ausführungsform unterscheidet. Die Durchgangsöffnungen 3 des in den Figuren 7 bis 9 dargestellten Siebelementes 4 sind wabenförmig ausgebildet und erstrecken sich jeweils in einer radialen Richtung R. Auch sie umfassen einen Eintrittsbereich 13 mit einer Rundung, die einen Radius im Bereich zwischen 0,3 mm und 1,0 mm aufweist, sowie einen Diffusorabschnitt 14 mit einem Diffusorwinkel a, der insbesondere im Bereich zwischen 12 und 15 Grad liegt.

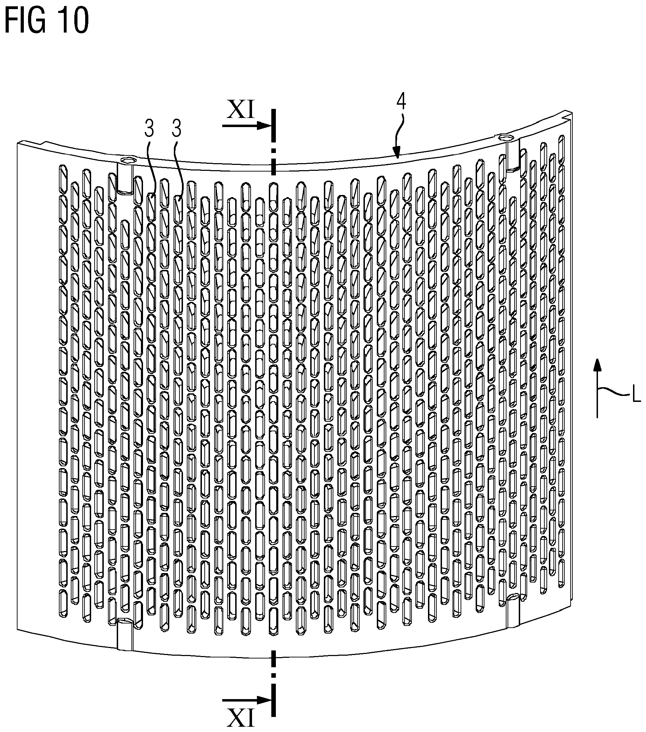

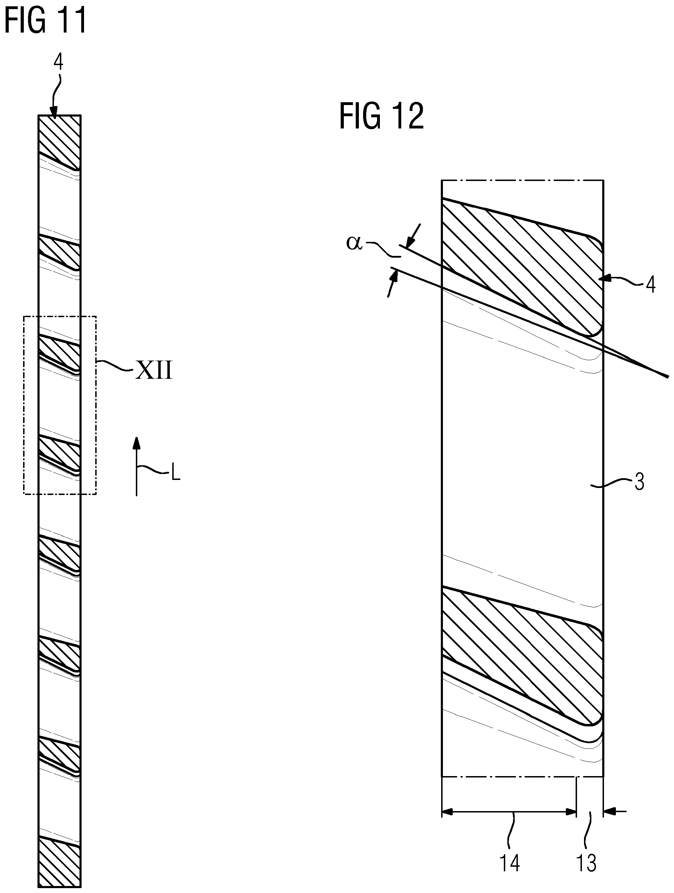

Die Figuren 10 bis 12 zeigen ein Siebelement 4 gemäß einer dritten Ausführungsform der vorliegenden Erfindung, die sich in Bezug auf die Ausbildung der Durchgangsöffnungen 3 von der zuvor beschriebenen Ausführungsformen unterscheidet. Die Durchgangsöffnungen 3 des in den Figuren 7 bis 9 dargestellten Siebelementes 4 haben eine längliche Querschnittsform mit insbesondere abgerundeten Endbereichen, wobei die Endbereiche vorliegend in Richtung der Stützringe 2 weisen. Die Durchgangsöffnungen umfassen einen Eintrittsbereich 13 mit einer Rundung, die einen Radius im Bereich zwischen 0,3 mm und 1,0 mm aufweist, sowie einen Diffusorabschnitt 14 mit einem Diffusorwinkel a, der insbesondere im Bereich zwischen 12 und 15 Grad liegt. Sämtliche Durchgangsöffnungen 3 erstrecken sich dabei ausgehend von der Eintrittsöffnung in einer einheitlichen Abwärtsrichtung.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen. Insbesondere können die Anzahl und/oder die Anordnung der Siebelemente 4 und/oder der Durchgangsbohrungen 7 und/oder der Durchgangsgewindebohrungen 8 variiert werden.

## Patentansprüche

1. Dampfsieb (1) mit zwei in einer Längsrichtung (L) im Abstand zueinander angeordneten Stützringen (2) und mehreren benachbart zueinander angeordneten, ringsegmentförmigen und eine Vielzahl von Durchgangsöffnungen (3) aufweisenden Siebelementen (4), die jeweils an den Stützringen (2) lösbar befestigt sind und sich unter Bildung einer Mantelfläche zwischen diesen erstrecken,
wobei die Seitenkanten unmittelbar benachbart zueinander angeordneter Siebelemente (4) aneinander anliegen,
wobei die Durchgangsöffnungen (3) der Siebelemente (4) einen sich radial einwärts aufweitenden Diffusorabschnitt (14) aufweisen,
die Seitenkanten unmittelbar benachbart zueinander angeordneter Siebelemente (4) ineinandergreifende Überlappungsbereiche definieren.

2. Dampfsieb (1) nach Anspruch 1,
**dadurch gekennzeichnet, dass**
die Mantelfläche zylindrisch oder konisch ausgebildet ist.

3. Dampfsieb (1) nach einem der vorhergehenden Ansprüche, **dadurch gekennzeichnet, dass**
die Stützringe (2) an ihrer zu den Siebelementen (4) weisenden Fläche eine ringförmig umlaufende Nut (5) aufweisen, in der die Siebelemente (4) angeordnet sind.

4. Dampfsieb (1) nach Anspruch 3,
**dadurch gekennzeichnet, dass**
die Siebelemente (4) verdrehsicher in der Nut (5) angeordnet sind.

5. Dampfsieb (1) nach Anspruch 4,
**dadurch gekennzeichnet, dass**
zumindest eine der Seitenwände der Nut (5) Ausbuchtungen (6) aufweist und die Siebelemente (4) in die Ausbuchtungen (6) eingreifende Vorsprünge (9) umfassen.

6. Dampfsieb (1) nach Anspruch 5,
**dadurch gekennzeichnet, dass**
beide Seitenwände der Nut (5) in radialer Richtung jeweils einander gegenüber angeordnete Ausbuchtungen (6) aufweisen und die Siebelemente (4) radial einander gegenüber angeordnete, in die Ausbuchtungen (6) eingreifende Vorsprünge (9) umfassen.

7. Dampfsieb (1) nach Anspruch 5 oder 6,
**dadurch gekennzeichnet, dass**
am Nutgrund im Bereich der Ausbuchtungen (6) Durchgangsbohrungen (7) vorgesehen sind, in die sich durch den Stützring erstreckende, insbesondere in diesen versenkte Befestigungsschrauben (17) eingesetzt sind, die in an den Siebelementen (4) ausgebildete Gewindebohrungen (10) eingeschraubt sind.

8. Dampfsieb (1) nach einem der vorhergehenden Ansprüche, **dadurch gekennzeichnet, dass**
die Durchgangsöffnungen (3) der Siebelemente (4) einen wabenförmigen Querschnitt oder eine längliche Querschnittsform mit insbesondere abgerundeten Endbereichen aufweist,
wobei die Endbereiche bevorzugt in Richtung der Stützringe (2) weisen.

9. Dampfsieb (1) nach einem der vorhergehenden Ansprüche, **dadurch gekennzeichnet, dass**
der Diffusorwinkel (α) im Bereich zwischen 5° und 15° liegt.

10. Dampfsieb (1) nach einem der vorhergehenden Ansprüche,
**dadurch gekennzeichnet, dass**
die Durchgangsöffnungen (3) der Siebelemente (4) einen mit einer Rundung versehenen Eintrittsbereich (13) aufweisen, wobei der Radius der Rundung insbesondere im Bereich zwischen 0,3 mm und 1,0 mm liegt.

11. Dampfsieb (1) nach einem der vorhergehenden Ansprüche, **dadurch gekennzeichnet, dass**
zumindest die Siebelemente (4) unter Einsatz eines additiven Herstellungsverfahrens hergestellt sind, insbesondere mittels selektiven Lasersinterns (SLS) oder mittels selektiven Laserschmelzens (SLM).

12. Dampfsieb (1) mit mehreren eine Vielzahl von Durchgangsöffnungen (3) aufweisenden, sich in einer Längsrichtung (L) erstreckenden Siebelementen (4), nach einem der vorhergehenden Ansprüche,
**dadurch gekennzeichnet, dass**
die Ausrichtung der Durchgangsöffnungen (3) der Siebelemente (4) in Abhängigkeit von ihrer Position bezogen auf die Längsrichtung (L) verschieden ist, insbesondere derart, dass ein die Durchgangsöffnungen (3) durchströmendes Fluid aufgrund der jeweiligen Ausrichtung der Durchgangsöffnungen (3) zu einem gemeinsamen Punkt (15) gelenkt wird, der sich insbesondere innerhalb des Dampfsiebes (1) befindet.

## Claims

1. Steam strainer (1) with two supporting rings (2) arranged spaced apart from one another in a longitudinal direction (L) and multiple strainer elements (4) which are arranged adjacent to one another, are in the form of a segment of a ring, have a plurality of passage openings (3), are detachably fastened in each case to the supporting rings, (2) and extend between said supporting rings, thereby forming a lateral surface,
wherein the side edges of strainer elements (4) arranged directly adjacent to one another bear against one another, wherein the passage openings (3) of the strainer elements (4) have a diffuser portion (14) which widens radially inwards,
the side edges of strainer elements (4) arranged directly adjacent to one another define interlocking overlapping regions.

2. Steam strainer (1) according to Claim 1,
**characterized in that**
the lateral surface has a cylindrical or conical form.

3. Steam strainer (1) according to either of the preceding claims,
**characterized in that**
on their surface facing the strainer elements (4), the supporting rings (2) have an annularly circumferential groove (5) in which the strainer elements (4) are arranged.

4. Steam strainer (1) according to Claim 3,
**characterized in that**
the strainer elements (4) are arranged in a rotationally secured manner in the groove (5).

5. Steam strainer (1) according to Claim 4,
**characterized in that**
at least one of the side walls of the groove (5) has bulges (6) and the strainer elements (4) comprise projections (9) which engage in the bulges (6).

6. Steam strainer (1) according to Claim 5,
**characterized in that**
in the radial direction, the two side walls of the groove (5) have respective bulges (6) arranged opposite one another and the strainer elements (4) comprise projections (9) which are arranged radially opposite one another and engage in the bulges (6) .

7. Steam strainer (1) according to Claim 5 or 6, **characterized in that**
passage bores (7) are provided on the groove base in the region of the bulges (6), in which passage bores fastening screws (17) which extend through the supporting ring and are in particular countersunk therein are inserted, which fastening screws are screwed in threaded bores (10) formed on the strainer elements (4) .

8. Steam strainer (1) according to one of the preceding claims,
**characterized in that**
the passage openings (3) of the strainer elements (4) have a honeycomb-shaped cross section or an elongate cross-sectional form with in particular rounded end regions,
wherein the end regions preferably point in the direction of the supporting rings (2).

9. Steam strainer (1) according to one of the preceding claims,
**characterized in that**
the diffuser angle (α) is in the range between 5° and 15°.

10. Steam strainer (1) according to one of the preceding claims,
**characterized in that**
the passage openings (3) in the strainer elements (4) have an inlet region (13) provided with a rounding, wherein the radius of the rounding is in particular in the range between 0.3 mm and 1.0 mm.

11. Steam strainer (1) according to one of the preceding claims,
**characterized in that**
at least the strainer elements (4) are produced using an additive production method, in particular by means of selective laser sintering (SLS) or by means of selective laser melting (SLM) .

12. Steam strainer (1) with multiple strainer elements (4) which have a multiplicity of passage openings (3) and extend in a longitudinal direction (L), according to one of the preceding claims,
**characterized in that**
the alignment of the passage openings (3) of the strainer elements (4) is different depending on their position relative to the longitudinal direction (L), in particular such that a fluid which flows through the passage openings (3) is guided to a common point (15) as a result of the respective alignment of the passage openings (3), which common point is located in particular within the steam strainer (1).

## Revendications

1. Filtre (1) à vapeur ayant deux anneaux (2) d'appui, disposés à distance l'un de l'autre dans la direction (L) longitudinale, et plusieurs éléments (4) de filtre, qui sont disposés au voisinage les uns des autres, qui sont en forme de segment annulaire, qui ont une pluralité d'ouvertures (3) de passage, qui sont fixés de manière amovible aux anneaux (2) d'appui et qui s'étendent entre ceux-ci en formant une surface latérale, dans lequel les bords latéraux d'éléments (4) de filtre disposés immédiatement au voisinage l'un de l'autre s'appliquent l'un à l'autre,
dans lequel les ouvertures (3) de passage des éléments (4) de filtre ont une partie (14) formant diffuseur s'élargissant vers l'intérieur radialement,
les bords latéraux d'éléments (4) de filtre immédiatement voisins l'une de l'autre définissent des régions de chevauchement s'interpénétrant.

2. Filtre (1) à vapeur suivant la revendication 1,
**caractérisé en ce que**
la surface latérale est cylindrique ou conique.

3. Filtre (1) à vapeur suivant l'une des revendications précédentes,
**caractérisé en ce que**
les anneaux (2) d'appui ont sur leur surface tournée vers les éléments (4) de filtre une rainure (5) qui fait le tour annulairement et dans laquelle sont montés les éléments (4) de filtre.

4. Filtre (1) à vapeur suivant la revendication 3,
**caractérisé en ce que**
les éléments (4) de filtre sont montés sans pouvoir tourner dans la rainure (5).

5. Filtre (1) à vapeur suivant la revendication 4,
**caractérisé en ce que**
au moins l'une des parois latérales de la rainure (5) a des bosses (6) sortantes et les éléments (4) de filtre comprennent des saillies (9) pénétrant dans les bosses (6) sortantes.

6. Filtre (1) à vapeur suivant la revendication 5,
**caractérisé en ce que**
les deux parois latérales de la rainure (5) ont des bosses (6) sortantes disposées respectivement les unes en face des autres dans la direction radiale et les éléments (4) de filtre comprennent des saillies (9) disposées radialement les unes en face des autres et pénétrant dans les bosses (6) sortantes.

7. Filtre (1) à vapeur suivant la revendication 5 ou 6, **caractérisé en ce que**
il est prévu au fond de la rainure dans la région des bosses (6) sortantes des trous (7) de passage dans lesquels sont insérées des vis (17) de fixation, qui passent à travers l'anneau d'appui, en y étant notamment noyées, et qui sont vissées dans des taraudages (10) constitués sur les éléments (4) de filtre.

8. Filtre (1) à vapeur suivant l'une des revendications précédentes,
**caractérisé en ce que**
les ouvertures (3) de passage des éléments (4) de filtre ont une section transversale en forme de nid d'abeille ou une forme de section transversale oblongue ayant notamment des parties d'extrémités arrondies, dans lequel les parties d'extrémités sont tournées de préférence en direction des anneaux (2) d'appui.

9. Filtre (1) à vapeur suivant l'une des revendications précédentes,
**caractérisé en ce que**
l'angle (α) de diffuseur est dans la plage comprise entre 5° et 15°.

10. Filtre (1) à vapeur suivant l'une des revendications précédentes,
**caractérisé en ce que**
les ouvertures (3) de passage des éléments (4) d'appui ont une partie (13) d'entrée pourvues d'un arrondi, le rayon de l'arrondi étant notamment dans la plage comprise entre 0,3 mm et 1,0 mm.

11. Filtre (1) à vapeur suivant l'une des revendications précédentes,
**caractérisé en ce que**
au moins les éléments (4) de filtre sont fabriqués en utilisant un procédé de fabrication additif, notamment au moyen d'un frittage laser sélectif (SLS) ou au moyen d'une fusion laser sélective (SLM).

12. Filtre (1) à vapeur ayant plusieurs éléments (4) de filtre comportant une pluralité d'ouvertures (3) de passage et s'étendant dans une direction (L) longitudinale, suivant l'une des revendications précédentes,
**caractérisé en ce que**
l'orientation des ouvertures (3) de passage des éléments (4) de filtre est différente en fonction de leur position rapportée à la direction (L) longitudinale, notamment de manière à ce que un fluide passant dans les ouvertures (3) de passage soit, en raison de l'orientation respective des ouverture (3) de passage, dévié vers un point (15) commun, qui se trouve notamment à l'intérieur, du filtre (1) à vapeur.
